# EUROPEAN PATENT APPLICATION

(11) **EP 4 503 209 A2**
(43) Date of publication of application: **05.02.2025**
(21) Application number: 24188016.0
(22) Date of filing: 11.07.2024
(51) Int. Cl.: H01M 8/0206, H01M 8/0232, H01M 8/0282, H01M 8/2432

(54) **SOLID OXIDE ELECTROCHEMICAL CELL STACK**

(30) Priority: 01.08.2023 JP 2023125558
(71) Applicant: Toshiba Energy Systems & Solutions Corporation, Saiwai-ku Kawasaki-shi Kanagawa (JP)
(72) Inventor: MATSUNAGA, Kentaro, Kawasaki-shi, Kanagawa (JP); OSADA, Norikazu, Kawasaki-shi, Kanagawa (JP); YOSHINO, Masato, Kawasaki-shi, Kanagawa (JP); ONO, Takahiro, Kawasaki-shi, Kanagawa (JP); WATANABE, Hisao, Kawasaki-shi, Kanagawa (JP); SUZUKI, Yusuke, Kawasaki-shi, Kanagawa (JP); SAITO, Kazuhiro, Kawasaki-shi, Kanagawa (JP); ASAYAMA, Masahiro, Kawasaki-shi, Kanagawa (JP)
(74) Representative: Hoffmann Eitle

(57) **Abstract**

A solid oxide electrochemical cell stack includes: a first planar electrochemical cell; a second planar electrochemical cell stacked with the first planar electrochemical cell; a separator electrically connected to a first hydrogen electrode and a second oxygen electrode; a first conductor connecting the first hydrogen electrode and the separator; and a second conductor connecting the second oxygen electrode and the separator. The second conductor includes a porous conductor through which at least one supplied gas is supplied and diffused to second the oxygen electrode, and a structure-supporting conductor to prevent mechanical displacements of the cells.

## Description

### FIELD

Embodiments relate to a solid oxide electrochemical cell stack.

### BACKGROUND

A solid oxide fuel cell (SOFC) is a device which makes a reductant such as hydrogen or hydrocarbon and an oxidant such oxygen react with each other via a solid oxide electrolyte membrane having oxygen ion conductivity, to obtain its energy as electricity, in an operation state normally at about 600-1000°C. SOFC includes a unit cell having two electrodes called oxygen and hydrogen electrodes, the oxygen electrode functioning to generate oxygen ions from oxygen gas and electrons, and the reduction electrode functioning to separate hydrogen gas into hydrogen ions and electrons and generate water molecules from the hydrogen ions and the oxygen ions. On the other hand, a solid oxide electrolysis cell (SOEC/high-temperature water vapor electrolysis cell) is a device which electrolyzes water vapor at high temperature to obtain hydrogen and oxygen, and its operation principle is a reaction reverse to the reaction by the SOFC. Hereinafter, the SOFC and the SOEC are collectively called a solid oxide electrochemical cell (SOC).

Example shapes of the solid oxide electrochemical cell include various shapes such as a flat plate shape, a cylindrical shape, a cylindrical flat plate shape, a honeycomb shape, and so on. Further, a plurality of the cells are stacked and integrated to form a structure called a cell stack. For example, planar solid oxide electrochemical cells (hereinafter, each described as a "planar cells") are stacked to constitute a planar solid oxide electrochemical cell stack (hereinafter, described as a "planar cell stack"). The planar cell stack includes cell units, busbars (current supply terminals), and clamping plates, each cell unit defining a constitutional unit and having a planar cell, a conductive separator, and a supporting insulator, the conductive separator functions to separate atmospheres (supply and exhaust gasses) on the oxygen and hydrogen electrodes in the planar cell from each other and electrically connecting the electrodes of the adjacent unit cells, the supporting insulator electrically insulating edges of the adjacent cells, and the busbars functioning to pass current through the cell units stacked in series, and the clamping plates functioning to hold and integrate the whole.

The cell stack in which the planar cells are stacked, needs to maintain the electrical contact of electrode portions of unit cells in contact with each other, and prevent cell breakage due to over-clamping while maintaining a space for supplying gas to the oxygen electrode/hydrogen electrode/generating gas at the portion which supports the whole stack structure. Further, at the portion which supports the whole stack structure, it is necessary to give the insulating property in order to prevent an electrical short circuit between the adjacent cells in the stacking direction between upper and lower clamping plates. Regarding each cell unit, it is necessary to prevent gas leak (out leak) to the outside of the stack at the end piton and gas leak (cross leak) between the oxygen electrode/hydrogen electrode at the interface of the end pitons of the cells and to reduce the occurrence of the crack and breakage due to the distortion of the planar cell in the case where a pressure difference occurs between the electrodes.

For example, in the planar cell stack, particularly when a pressure of gas to be supplied to the hydrogen electrode side increases, the middle portion of the planar cell fixed at the end portion warps toward the oxygen electrode side, resulting in that a cell breakage or the like tends to occur. This tendency increases as the area of the unit cell is larger and the thickness of the unit cell is smaller. It has been proposed so far to reduce or prevent the curvature of the planar cell to be used in the stack, control the particle structure and distribution in the thickness direction of a planar cell base material, provide a structure of absorbing the displacement at a joint portion between a cell end portion and a stack frame, and so on. However, a cell stack structure which satisfies all of the above characteristics in an actual operation, namely, structural support, insulation property, denseness, interfacial sealing, and differential pressure resistance has not been proposed so far.

### BRIEF DESCRIPTION OF THE DRAWINGS

FIG. 1 is a cross-sectional view illustrating a first example of a solid oxide electrochemical cell stack in an embodiment.
FIG. 2 is a cross-sectional view illustrating a configuration of an electrochemical cell of the solid oxide electrochemical cell stack illustrated in FIG. 1.
FIG. 3 is a cross-sectional view illustrating a second example of the solid oxide electrochemical cell stack in an embodiment.
FIG. 4 is a cross-sectional view illustrating a third example of the solid oxide electrochemical cell stack in an embodiment.
FIG. 5 is a plan view illustrating a flow of gas in the solid oxide electrochemical cell stack illustrated in FIG. 1.
FIG. 6 is a plan view illustrating a first arrangement of a structure-supporting conductor in the solid oxide electrochemical cell stack illustrated in FIG. 1.
FIG. 7 is a plan view illustrating a second arrangement of the structure-supporting conductor in the solid oxide electrochemical cell stack illustrated in FIG. 1.
FIG. 8 is a plan view illustrating a third arrangement of the structure-supporting conductor in the solid oxide electrochemical cell stack illustrated in FIG. 1.
FIG. 9 is a plan view illustrating a fourth arrangement of the structure-supporting conductor in the solid oxide electrochemical cell stack illustrated in FIG. 1.
FIG. 10 is a cross-sectional view illustrating a decomposition structure of a fourth example of the solid oxide electrochemical cell stack in an embodiment.
FIG. 11 is a cross-sectional view illustrating a fifth example of the solid oxide electrochemical cell stack in an embodiment.
FIG. 12 is a cross-sectional view illustrating a sixth example of the solid oxide electrochemical cell stack in an embodiment.

### DETAILED DESCRIPTION

A solid oxide electrochemical cell stack in an embodiment includes: a first planar electrochemical cell comprising a first hydrogen electrode, a first solid oxide electrolyte layer, and a first oxygen electrode; a second planar electrochemical cell stacked with the first planar electrochemical cell, the second planar electrochemical cell comprising a second hydrogen electrode, a second solid oxide electrolyte layer, and a second oxygen electrode, and; a separator being conductive and impermeable to gas, the separator being provided between the first and the second planar electrochemical cell so as to be electrically connected to the first hydrogen electrode and the second oxygen electrode; a first conductor electrically connecting the first hydrogen electrode and the separator; a second conductor electrically connecting the second oxygen electrode and the separator; and a supporting insulator provided around a region stacked with the first planar electrochemical cell, the first conductor, the separator, the second conductor and the second planar electrochemical cell in a direction, the supporting insulator being configured to maintain a space in which at least one supplied gas reaches to the first and second hydrogen electrodes and the first and second oxygen electrodes and in which at least one generated gas flows, and the supporting insulator being configured to prevent the region from short-circuiting in the direction. The second conductor includes: a porous conductor through which the at least one supplied gas is supplied and diffused to the second oxygen electrode; and a structure-supporting conductor configured to prevent mechanical displacements of the first and second planar electrochemical cells.

Hereinafter, solid oxide electrochemical cell stacks in embodiments will be explained with reference to the drawings. In each of the embodiments illustrated below, substantially the same components are denoted by the same reference signs and an explanation thereof is partially omitted in some cases. The drawings are schematic and a relation between the thickness and planar dimension, a thickness ratio among the components, and so on may be different from actual ones. The sign "-" in the following explanation indicates a range between the upper limit value and the lower limit value of each numerical value. In that case, each numerical value range includes the upper limit value and the lower limit value.

### (First Embodiment)

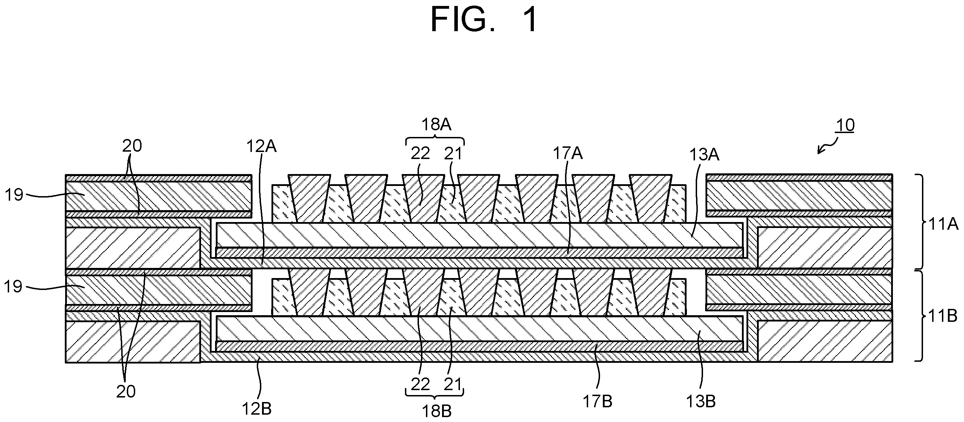

FIG. 1 is a cross-sectional view illustrating a solid oxide electrochemical cell stack in a first embodiment. A solid oxide electrochemical cell stack 10 illustrated in FIG. 1 has a structure in which a first electrochemical cell structure 11A and a second electrochemical cell structure 11B are stacked via a separator 12 (a first separator 12A or a second separator 12B). The electrochemical cell structure 11A and the electrochemical cell structure 11B respectively include a first electrochemical cell 13A and a second electrochemical cell 13B, the first electrochemical cell 13A and the second electrochemical cell 13B being disposed respectively in a depression on the middle of the first separator 12A and in a depression on the middle of the second separator 12B.

FIG. 1 illustrates the structure in which the first electrochemical cell structure 11A and the second electrochemical cell structure 11B are stacked, but the number of the electrochemical cell structures 11 stacked is not particularly limited, and the solid oxide electrochemical cell stack 10 may have a structure in which three or more of the electrochemical cell structures 11 are stacked. In the case of stacking three or more electrochemical cell structures 11, the separator 12 is arranged between two electrochemical cells 13A and 13B adjacent to each other, and electrodes of the electrochemical cells 13A, 13B are electrically connected via the separators 12 (the first separator 12A and the second separator 12B). An example of the separator 12 can be formed using a ferritic stainless steel such as SUS430, the ferritic stainless steel being close in thermal expansion coefficient to the electrochemical cells 13A, 13B.

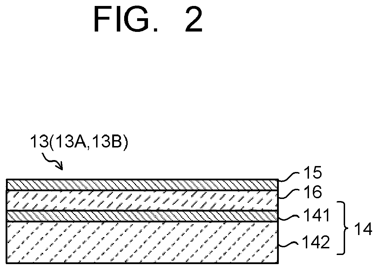

The first electrochemical cell 13A and the second electrochemical cell 13B have the same configuration. Each of the first and second electrochemical cells 13A, 13B has a first electrode which functions as a hydrogen electrode 14, a second electrode which functions as an oxygen electrode 15, and a solid oxide electrolyte layer 16 which is arranged between the electrode 14 and the electrode 15, as illustrated in FIG. 2. The hydrogen electrode 14 includes a hydrogen electrode activation layer 141 which is arranged in a manner to be in contact with the solid oxide electrolyte layer 16, and a hydrogen electrode supporting layer 142 which is stacked with the hydrogen electrode activation layer 141 and functions as a supporting layer of a cell structure. The solid oxide electrolyte layer 16 and the oxygen electrode 15 may be arranged across a layer such as a reaction preventing layer.

Each of the hydrogen electrode 14 and the oxygen electrode 15 as the first and second electrodes is formed of a porous electric conductor. The hydrogen electrode 14 is formed by arranging the hydrogen electrode activation layer 141 on or above the hydrogen electrode supporting layer 142, these layers being porous. The solid oxide electrolyte layer 16 is formed of, for example, a dense solid oxide electrolyte, and is an ion conductor which does not electricity. Each of the hydrogen electrode 14 having the hydrogen electrode activation layer 141 and the hydrogen electrode supporting layer 142 and the oxygen electrode 15 is formed of an electric conductor having gas permeability such as a sintered porous metal compact, a metal mesh, or a metal network so as not to inhibit the flows of at least one supplied gas and at least one generated gas, the at least one supplied gas being supplied to the cells 13A, 13B, and the at least one generated gas being generated by the cells 13A, 13B. These maintain the reactions by the hydrogen electrode 14 and the oxygen electrode 15 and allow the supplied gases and the generated gases to efficiently flow.

The hydrogen electrode 14 of each of the cells 13A and 13B and the corresponding separator 12 are electrically connected via a first conductor 17 (a first conductor 17A or a first conductor 17B) closer to the hydrogen electrode 14 than the corresponding oxygen electrode 15. Further, the oxygen electrode 15 of each of the cells 13A and 13B and the corresponding separator 12 are electrically connected via a second conductor 18 (a second conductor 18A or a second conductor 18B) closer to the corresponding oxygen electrode 15 than the corresponding hydrogen electrode 14. Each of the first conductors 17 (the first conductors 17A, 17B) and the second conductors 18 (the second conductors 18A, 18B) is preferably formed using a substance (electrical conductor) which maintains conductivity in each electrode atmosphere under an operating condition (at temperatures of 600-900°C) and causes chemical reactions with the electrode and the separator surface in contact therewith so as not interfere with a cell reaction. For example, the first conductor 17 closer to the hydrogen electrode 14 can be formed using a metal such as nickel (Ni), and the second conductor 18 closer to the oxygen electrode 15 can be formed using a metal such as silver (Ag). The first and second conductors 17 and 18 enable to an electrical contact between the electrodes of the unit cells 13 via the separator 12, the unit cells 13 being stacked to be in contact with each other.

FIG. 1 illustrates only the structure in which the first electrochemical cell 13A and the second electrochemical cell 13B are stacked, and therefore illustrates the first conductor 17A arranged between the hydrogen electrode 14 of the first electrochemical cell 13A and the separator 12A, and the first conductor 17B arranged between the hydrogen electrode 14 of the second electrochemical cell 13B and the separator 12B. Regarding the second conductors 18A, 18B closer to the oxygen electrode 15, only the second conductor 18B arranged between the oxygen electrode 15 of the second electrochemical cell 13B and the separator 12A is illustrated. In the actual device configuration, other electrochemical cell and separator are arranged on the second conductor 18A, so that the second conductor 18A is arranged between the other separator and the oxygen electrode 15 of the first electrochemical cell 13A.

The solid oxide electrochemical cell stack 10 includes supporting insulators (electrical insulators) 19 above frame edges of the separators 12A, 12B, the frame edges being around the first and second electrochemical cells 13A, 13B, and the supporting insulators 19 being arranged in order to maintain a space in which the at least one supplied gas is supplied to the oxygen electrode 15 and in which the at least one generated gas is generated by the oxygen electrode 15, to prevent cell breakage due to over-clamping of the stack 10, and to prevent an electrical short circuit in a stacking direction of the cells 13A, 13B. The solid oxide electrochemical cell stack 10 includes gas sealing layers 20 between each metal member and insulating member, the gas sealing layers 20 being provided on surfaces of each of the supporting insulators 19. The gas sealing layers 20 are formed of a material such as glass. The arrangement of the gas sealing layer 20 prevents gas leak (out leak) to the outside of the stack at the edge of the cell stack 10.

FIG. 1 illustrates a planar electrochemical cell of the electrochemical cell 13, assuming that the electrochemical cell 13 is a hydrogen electrode-supported square cell. However, the shape and specification of the planar cell in an actual operation are not particularly limited. For example, regarding the shape, a square, a rectangle, a circle, or the like is also applicable. Further, regarding the supporting type, an electrode supporting type, an electrolyte supporting type, a supporting type by a support such as a metal, or the like may be employed. The at least one supplied gas is selected according to the kind of the electrochemical cell 13. For example, in the case of operating the electrochemical cell 13 as a fuel cell, gas containing hydrogen as a main component, gas obtained by reforming hydrocarbon fuel, ammonia, or the like is supplied to the hydrogen electrode 14 side as one supplied gas, and gas containing oxygen is supplied to the oxygen electrode 15 as another supplied gas. In the case of using the electrochemical cell 13 for water vapor electrolysis, gas containing H₂O such as water vapor is introduced to the hydrogen electrode 14 side as one supplied gas, and air or the like for purge is supplied to the oxygen electrode 15 side as another supplied gas or not supplied in some cases. The cell stack 10 is configured to receive current via busbars (current supply terminals/not illustrated) in the case of the electrolytic reaction, or draw current via the busbars in the case of the fuel cell reaction, the busbars being provided on the top and the bottom of the cell stack 10.

The electrochemical cell stack 10 in which the first planar electrochemical cell 13A and second electrochemical cell 13B are stacked, needs to secure an electrical contact between the electrode portions of the unit cells 13 in contact with each other, maintain a space for supplying gas to the oxygen electrode 15/hydrogen electrode 14 and a space for generating gas and prevent the cell breakage due to over-clamping in a portion which supports the whole structure of the cell stack 10. Further, it is necessary to give an insulating property to the portion which supports the whole structure of the cell stack 10 in order to prevent an electrical short circuit between adjacent cells 13, particularly in the stacking direction between upper and lower clamping plates.

Further, the unit of each unit cell 13 needs to prevent gas leak (out leak) to the outside of the stack at the end piton and gas leak (cross leak) between the oxygen electrode and the hydrogen electrode at the interface of the end pitons of the cells 13, and to reduce or prevent occurrence of the crack and breakage due to the distortion of the planar cell in the case where a pressure difference occurs between the electrodes. For example, in the planar cell stack 10 having the unit structure in FIG. 1 and FIG. 2, particularly when the pressure of gas to be supplied to the hydrogen electrode side increases, the middle portion of the planar unit cell 13 fixed at the end portion warps toward the oxygen electrode side, resulting in that a breakage tends to occur at the unit cell 13. This tendency increases as the area of the unit cell 13 is larger and the thickness of the unit cell 13 is smaller.

Thus, the second conductor 18 (18A, 18B) on the oxygen electrode side of the electrochemical cell 13 is required to increase in strength while maintaining the electrical conduction, the gas diffusibility, and so on. Hence, in the electrochemical cell stack 10 in the embodiment, the second conductor 18 on the oxygen electrode side is composed of a composite conductor of a porous conductor 21 which maintains the supply and diffusion of gas to the oxygen electrode 15 and a structure-supporting conductor 22 which reduces or prevents mechanical displacement of the first electrochemical cell 13A and the second electrochemical cell 13B. This can secure the supply and diffusion of gas to the oxygen electrode 15 and reduces or prevents mechanical displacement such as bending of the cells 13A, 13B due to a differential pressure between the electrodes. Accordingly, it is possible to reduce or prevent the occurrence of the distortion and deformation of the planar electrochemical cell 13 due to the pressure difference between the electrodes and the crack and breakage accompanying them while maintaining the electrochemical reaction by the electrochemical cell 13, for example, the fuel cell reaction of hydrogen and oxygen and the electrolytic reaction (water vapor electrolytic reaction) of H₂O and maintaining the property of exhausting generated gas, thereby increasing the reliability of the electrochemical cell 13.

The porous conductor 21 and the structure-supporting conductor 22 can be formed using metal such as silver (Ag), carbon, or the like. The porous conductor 21 is formed using a porous base material with conductivity such as a porous metallic sintered compact, a metal mesh conductor, or a metal network conductor. The structure-supporting conductor 22 is formed using a metal member having a solid structure capable of maintaining the structure strength or the like. In FIG. 1, the structure-supporting conductor 22 is inserted into the hole provided in the porous conductor 21 to form a composite conductor, in which the porous conductor 21 and the structure-supporting conductor 22 are arranged in a manner to be alternately positioned. The structure supporting member 22 preferably has a Young's modulus equal to or more than the base material rigidity (before reduction: 70 GPa, after reduction: 30 GPa) of the flat plate cell 13, for example, a Young's modulus of 70 GPa or more. This can keep the structure by sufficiently reducing or preventing a structural change of a current collector at the displacement of the flat plate cell 13.

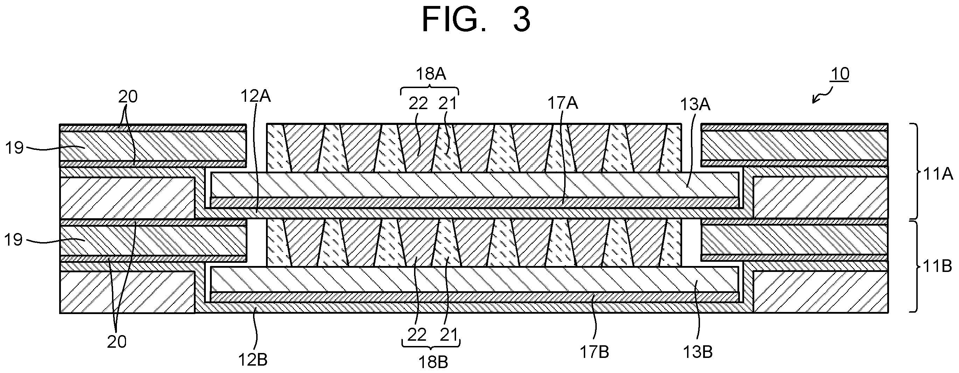

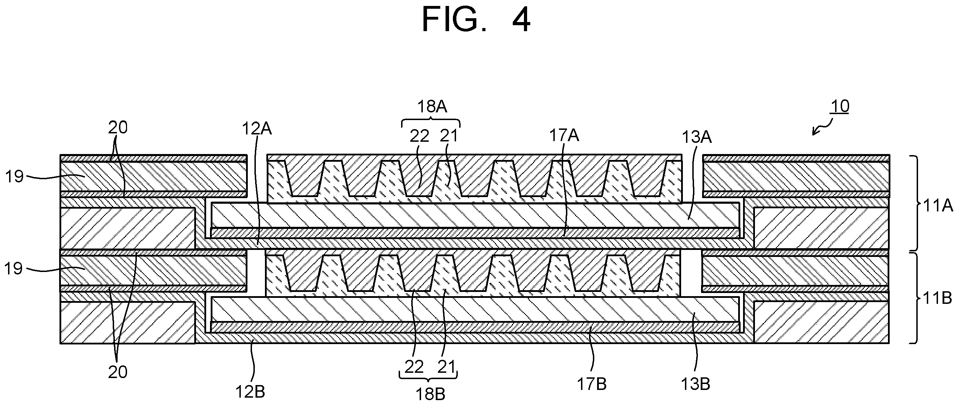

The structure of the second conductor 18 (18A, 18B) is not limited to the above-explained structure, but a member in which the porous conductor 21 and the structure-supporting conductor 22 are integrated and both surfaces are made into a flat surface state, for example, as illustrated in FIG. 3 may be used, or a member in which they are separately molded into a plate shape and then integrated by superposition or the like may be used as explained in a later-explained embodiment. Further, as illustrated in FIG. 4, the porous conductor 21 and the structure-supporting conductor 22 may be separately molded in a state in which a plurality of protrusions are formed on a flat plate and then superposed in a manner to combine these plurality of protrusions so that they may be used as an integrated member. In the second conductor 18 explained so far, the thickness of the porous conductor 21 in contact with the oxygen electrode 15 is preferably 0.05 mm or more. This can secure the gas diffusibility while reducing or preventing an increase in contact resistance on the entire surface of the oxygen electrode 16. Accordingly, it is possible to efficiently promote a reaction on the entire surface of the oxygen electrode 16.

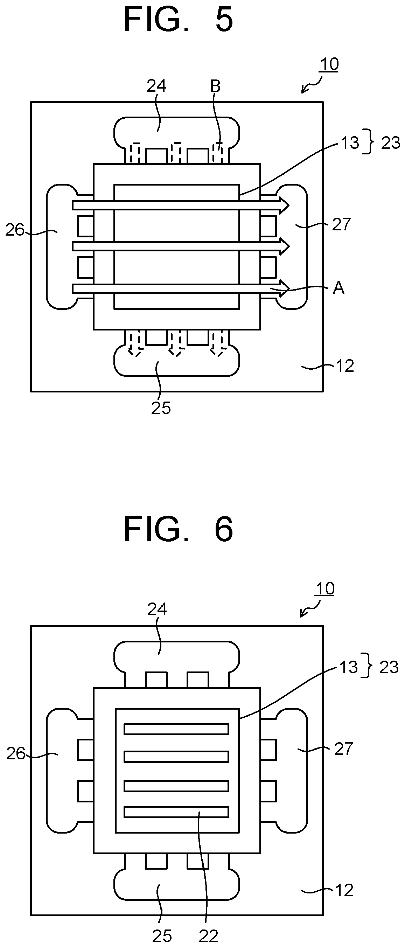

As illustrated in FIG. 1, in the case of using the member which is made composite by inserting the structure-supporting conductor 22 into the hole provided in the porous conductor 21, a portion of the structure-supporting conductor 22 protruding from the porous conductor 21 exists in a flow path of the supply gas and the exhaust gas. The flow of the gas in the electrochemical cell stack 10 is configured to supply the gas in parallel with the surfaces of the plurality of electrochemical cells 13 and exhaust the generated gas by providing a gas supply hole 24 and a gas exhaust hole 25 on the hydrogen electrode 14 side and a gas supply hole 26 and a gas exhaust hole 27 on the oxygen electrode 15 side at the separator 12 (12A, 12B, ...) at the periphery of a stack 23 of the plurality of electrochemical cells 13 (13A, 13B, ...), for example, as illustrated in FIG. 5.

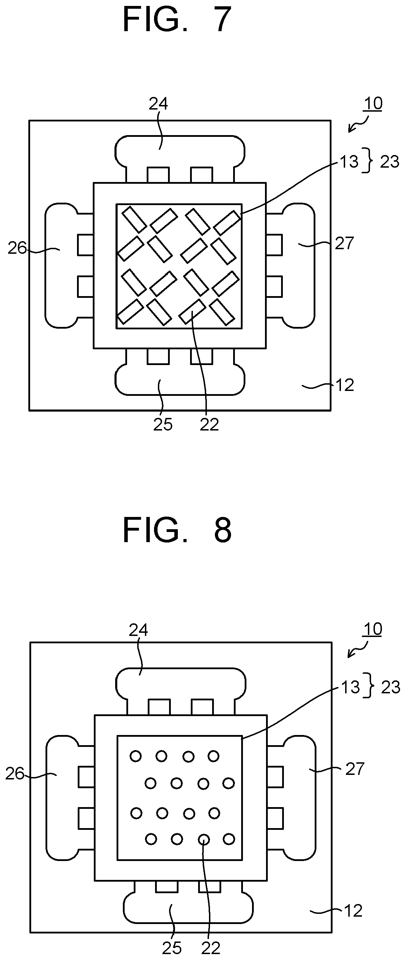

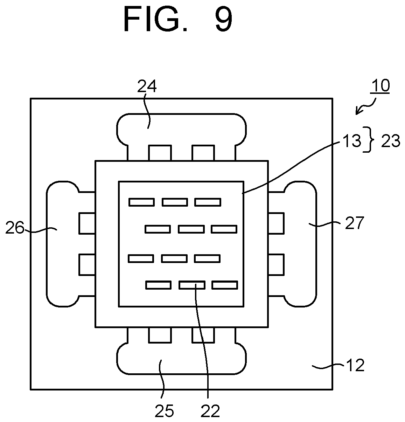

In the case of using a composite conductor of the porous conductor 21 and the structure-supporting conductor 22 illustrated in FIG. 1, the arrangement shape on a surface of the separator 12 of the structure-supporting conductor 22 may be, but not particularly limited to, a shape in which linear supporting members 22 are arrayed in parallel as illustrated in FIG. 6 or a shape in which they are arrayed in a lattice form, a shape in which linear supporting members 22 are arrayed in a cross form as illustrated in FIG. 7 or a shape in which they are arrayed in an inclined state, shapes in which circular or square dot-shaped structure supporting members 22 are arrayed at regular intervals as illustrated in FIG. 8 and FIG. 9, or the like. However, it is preferable to arrange the structure-supporting conductor 22 so as not to inhibit the flow of the gas to be supplied to the oxygen electrode 15 and the generated gas.

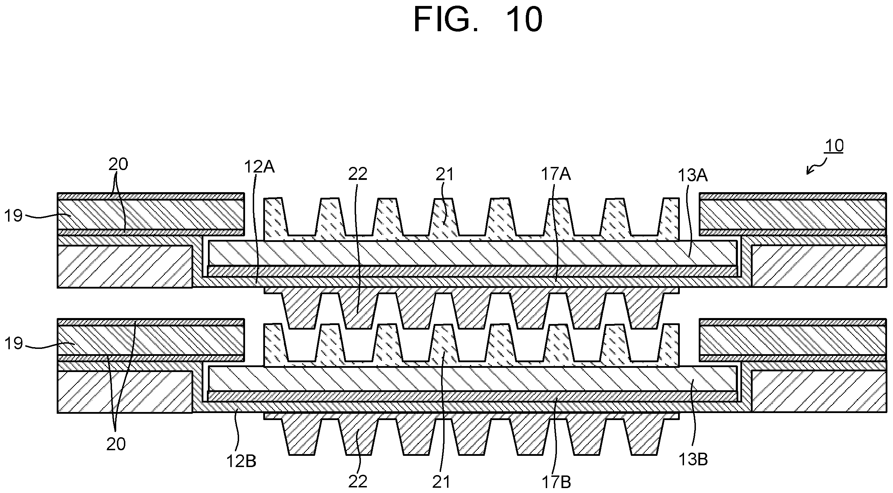

In the case of using the porous conductor 21 and the structure-supporting conductor 22 which are formed with the plurality of protrusions on the flat plates as illustrated in FIG. 4, the structure-supporting conductor 22 may be used integrally with the separator 12 arranged opposite to the second conductor 18 as illustrated in FIG. 10. Similarly, the porous conductor 21 may be used integrally with the electrochemical cell 13 (specifically, the oxygen electrode). Application of the above configuration can save time and effort when constituting the stack by stacking the plurality of electrochemical cells 13 and to enhance the manufacturability of the cell stack. The structure supporting member 22 may be integrated with the separator 12 by a method of welding, shaving, or the like, or may be processed by a method of pressing or the like.

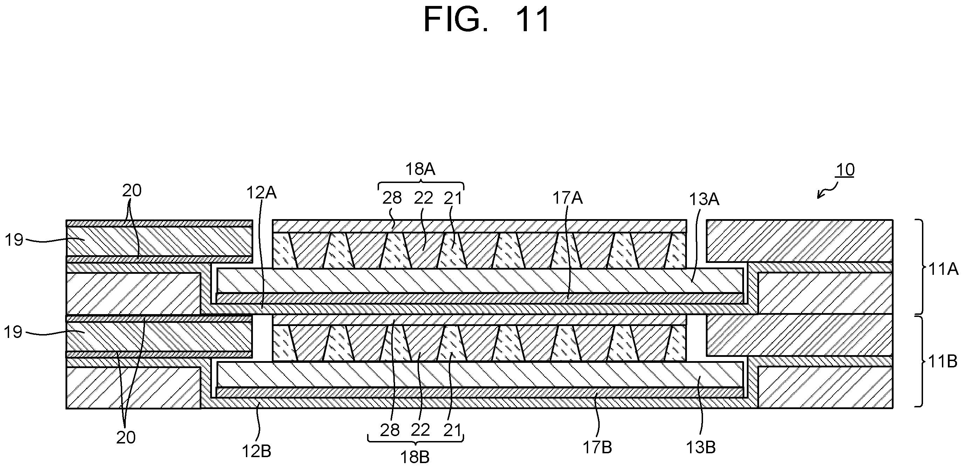

The second conductor 18 may include an elastic structure 28 having conductivity as illustrated in FIG. 11 in addition to the porous conductor 21 and the structure-supporting conductor 22. The second conductor 18 illustrated in FIG. 11 has a configuration in which the elastic structure 28 is arranged on the stack of the porous member 21 and the structure supporting member 22, and the elastic structure 28 is in contact with the separator 12. Examples of the structure giving elasticity include a leaf spring structure, a wave spring structure, or the like realized by a metal plate material having oxidation resistance and conductivity in an oxygen electrode atmosphere during operation. The elasticity that the spring structure of the elastic structure 28 should have is preferably elasticity corresponding to a spring constant of 5 kg/cm or more (corresponding to the elasticity of urethane at normal temperature) in the operating environment. This can sufficiently reduce the contact resistance between the separator and the oxygen electrode of the flat plate cell 13 without breaking the flat plate cell 13 via the separator (current collector) 12.

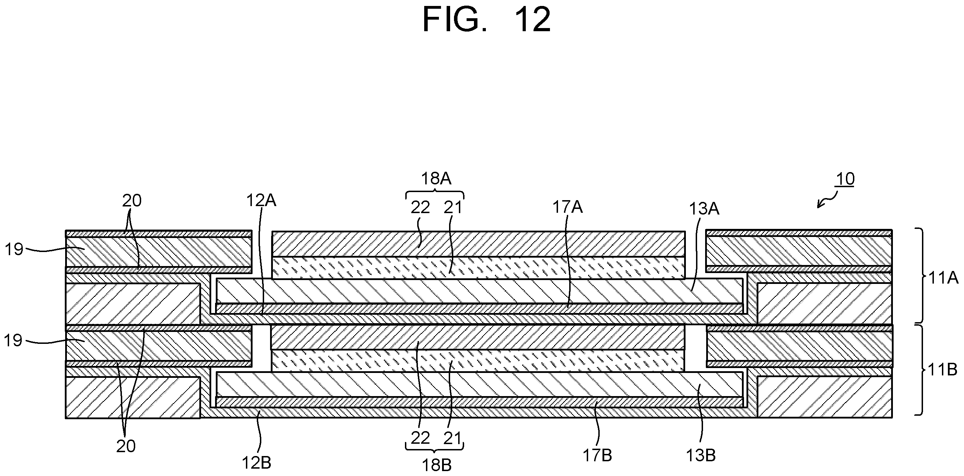

Further, the shapes of the porous conductor 21 and the structure-supporting conductor 22 in the second conductor 18 are not limited to the shapes in which projecting bodies as illustrated in FIG. 1 are combined in the plane direction (horizontal direction) of the cell stack 10. For example, a structure in which a flat plate-shaped porous conductor 21 and a flat plate-shaped structure-supporting conductor 22 are stacked may be provided as illustrated in FIG. 12. This second conductor 18 also can reduce or prevent the occurrence of the distortion and deformation of the planar electrochemical cell 13 due to the pressure difference between the electrodes and the crack and breakage accompanying them while maintaining the electrochemical reaction by the electrochemical cell 13, for example, the fuel cell reaction and the electrolytic reaction of H₂O and maintaining the property of exhausting generated gas, thereby increasing the reliability of the electrochemical cell 13.

The configurations in the above-explained embodiments can be applied in combination, and can be partially replaced. While certain embodiments of the present invention have been described above, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A solid oxide electrochemical cell stack comprising:
a first planar electrochemical cell comprising a first hydrogen electrode, a first solid oxide electrolyte layer, and a first oxygen electrode;
a second planar electrochemical cell stacked with the first planar electrochemical cell, the second planar electrochemical cell comprising a second hydrogen electrode, a second solid oxide electrolyte layer, and a second oxygen electrode, and;
a separator being conductive and impermeable to gas, the separator being provided between the first and the second planar electrochemical cell so as to be electrically connected to the first hydrogen electrode and the second oxygen electrode;
a first conductor electrically connecting the first hydrogen electrode and the separator;
a second conductor electrically connecting the second oxygen electrode and the separator; and
a supporting insulator provided around a region stacked with the first planar electrochemical cell, the first conductor, the separator, the second conductor and the second planar electrochemical cell in a direction, the supporting insulator being configured to maintain a space in which at least one supplied gas reaches to the first and second hydrogen electrodes and the first and second oxygen electrodes and in which at least one generated gas flows, and the supporting insulator being configured to prevent the region from short-circuiting in the direction, wherein
the second conductor includes:
a porous conductor through which the at least one supplied gas is supplied and diffused to the second oxygen electrode; and
a structure-supporting conductor configured to prevent mechanical displacements of the first and second planar electrochemical cells.

2. The cell stack according to claim 1, wherein
the structure-supporting conductor has a solid structure, and
the porous conductor has a sintered porous conductor, a mesh conductor, or a network conductor.

3. The cell stack according to claim 1, wherein
the porous conductor has a thickness of 0.05 mm or more.

4. The solid oxide electrochemical cell stack according to claim 1, wherein
the structure-supporting conductor has a Young's modulus of 70 GPa or more.

5. The cell stack according to claim 1, wherein
the second conductor further includes a conductive elastic structure arranged on a composite conductor of the porous conductor and the structure-supporting conductor.

6. The cell stack according to claim 1, wherein
the conductive elastic structure has a spring constant of 5 kg/cm or more in an environment in which the cell stack is operated.

7. The cell stack according to claim 1, wherein
the second conductor has a structure in which the porous conductor and the structure-supporting conductor are alternately arranged along a plane direction of the cell stack.

8. The cell stack according to claim 1, wherein
the second conductor has a structure in which the porous conductor and the structure-supporting conductor are stacked along a thickness direction of the cell stack.

9. The cell stack according to claim 1, wherein
the porous conductor contains silver or carbon, and
the structure-supporting conductor contains silver or carbon.

10. The cell stack according to claim 1, wherein
the second conductor has a plurality of the structure-supporting conductors,
each structure-supporting conductor penetrates through the porous conductor.

11. The cell stack according to claim 1, wherein
the porous conductor has first protrusions,
the structure-supporting has second protrusions,
each first protrusion and each second protrusion are alternately arranged.

12. The cell stack according to claim 10, wherein
each structure-supporting conductor has a part protruding from the porous conductor into the space.

13. The cell stack according to claim 1, wherein
the at least one supplied gas includes hydrogen gas, and
the at least one generated gas includes water vapor.

14. The cell stack according to claim 1, wherein
the at least one supplied gas includes water vapor, and
the at least one generated gas includes hydrogen gas and oxygen gas.

15. The cell stack according to claim 1, further comprising a gas sealing layer provided on the structure-supporting conductor.
